# EUROPÄISCHE PATENTSCHRIFT

(11) **EP 3 623 654 B1**
(45) Veröffentlichungstag und Bekanntmachung des Hinweises auf die Patenterteilung: **24.11.2021**
(21) Anmeldenummer: 19197463.3
(22) Anmeldetag: 16.09.2019
(51) Int. Cl.: F16C 15/00, F16C 32/04

(54) **MAGNETLAGERUNG UND SCHWUNGRADSPEICHER**
MAGNETIC BEARING AND FLYWHEEL ACCUMULATOR
PALIER MAGNÉTIQUE ET ACCUMULATEUR À VOLANT D'INERTIE

(30) Priorität: 14.09.2018 DE 102018122576
(43) Veröffentlichungstag der Anmeldung: 18.03.2020
(73) Patentinhaber: EneRes Ltd. Harneys Services (Cayman), KY1-1002 Grand Cayman (KY)
(72) Erfinder: BLEICHER, Friedrich, 1140 Wien (AT); WEILER, Thomas, 1050 Wien (AT)
(74) Vertreter: Winter, Brandl - Partnerschaft mbB

(56) Entgegenhaltungen:
- DE-A1-102005 030 139

## Beschreibung

Die Erfindung betrifft eine Magnetlagerung eines Rotors gemäß dem Oberbegriff des Patentanspruches 1 und einen mit einer derartigen Magnetlagerung ausgeführten Schwungradspeicher.

Herkömmlich werden zur Lagerung von Rotoren Wälz- und Gleitlager eingesetzt, bei denen die Kontaktflächen mittels eines flüssigen oder gasförmigen Schmierstoffes beaufschlagt sind, so dass der Verschleiß und die Reibung minimiert sind. Derartige herkömmliche Lager kommen bei bestimmten Betriebsbedingungen, beispielsweise bei hohen oder sehr niedrigen Umgebungstemperaturen oder bei extrem hohen Drehzahlen, bei einer Anwendung im Vakuum oder mit aggressiven Gasen an ihre Grenzen.

Als Alternative werden berührungslose Lager, insbesondere Magnetlager verwendet. Der Grundaufbau einer derartigen magnetischen Lagerung ist beispielsweise in der DE 17 50 602 C3 und in der Beschreibungseinleitung der DE 10 2005 028 209 A1 beschrieben.

Demgemäß haben derartige magnetische Lagerungen eine beispielsweise durch einen Permanentmagneten gebildete Axiallagerung, wobei der Permanentmagnet derart ausgelegt ist, dass er das Gewicht des Rotors in Axialrichtung trägt. Die Lagerung in Radialrichtung erfolgt mittels Elektromagneten, die jeweils über einen Regelkreis ansteuerbar sind. Die Radialposition des Rotors wird dabei über Positionssensoren erfasst, so dass die Ansteuerung der Elektromagneten jeweils über einen Regelkreis in Abhängigkeit von dem Signal des jeweiligen Positionssensors erfolgt.

Bei einem weiteren Ausführungsbeispiel wird anstelle des durch einen Permanentmagneten gebildeten Axiallagers ebenfalls ein aktives Magnetlager verwendet, wobei der Axialspalt über einen weiteren Positionssensor erfasst wird.

In der Druckschrift AT 513640 B1 ist eine entsprechende Magnetlagerung offenbart, die zum Levitieren eines Rotors eines Schwungrades verwendet wird.

Derartige Magnetlagerungen werden auch bei Turbo-Entspannungsturbinen und Verdichtern, Luft- und Gaskompressoren, Vakuumpumpen und Zentrifugen verwendet.

Möglichkeiten zur Ausgestaltung einer magnetischen Axiallagerung sind in den Druckschriften AT 513498 B1, DE 10 2005 028 209 A1 und DE 10 2016 004 714 A1 erläutert.

Ein Nachteil der vorbeschriebenen Systeme zum Levitieren eines Rotors an einer definierten Position im Raum mittels aktiven Feldkraftlagern besteht darin, dass fünf Freiheitsgrade (vier Freiheitsgrade in Radialrichtung, ein Freiheitsgrad in Axialrichtung) aktiv geregelt werden müssen und dementsprechend fünf Regelkreise mit der zugehörigen Leistungselektronik und fünf Positionssensoren erforderlich sind. Dies stellt einen erheblichen energetischen, vorrichtungstechnischen und regelungstechnischen Aufwand dar.

In der vorgenannten DE 10 2005 028 209 A1 ist eine Rotorwellenlagerung beschrieben, bei der die Radiallagerung nach dem Reluktanzprinzip erfolgt. Für die magnetische Axial- und Radiallagerung sind getrennte Mittel zur Erzeugung eines Magnetflusses erforderlich, so dass der regelungs- und vorrichtungstechnische Aufwand hoch ist Eine Magnetlagerung mit den Merkmalen des Oberbegriffs des unabhängigen Anspruchs 1 ist aus der DE 10 2005 030 139 A1 bekannt.

Der Erfindung liegt die Aufgabe zugrunde, eine Magnetlagerung zu schaffen, die bei kompaktem Aufbau ein Levitieren eines Rotors mit geringem Aufwand ermöglicht. Der Erfindung liegt des Weiteren die Aufgabe zugrunde, einen Schwungradspeicher zu schaffen, dessen Rotor mit geringem regelungstechnischen und vorrichtungstechnischen Aufwand levitiert ist.

Diese Aufgabe wird im Hinblick auf die Magnetlagerung durch die Merkmalskombination des Patentanspruches 1 und im Hinblick auf den Schwungradspeicher durch die Merkmalskombination des nebengeordneten Patentanspruches 10 gelöst.

Vorteilhafte Weiterbildungen der Erfindung sind Gegenstand der Unteransprüche.

Erfindungsgemäß wird ein Rotor in einem Gehäuse oder einem Gestell mittels einer Magnetlagerung levitiert, die im Prinzip eine Axial- und eine Radiallagerung aufweist, die jeweils als aktive oder permanente Feldkraftlager (Magnetlager) ausgeführt sind. Die erfindungsgemäße Magnetlagerung hat einen Positionssensor zur Erfassung der axialen Positionen des Rotors und einen Regelkreis zur Ansteuerung des aktiven axialen Feldkraftlagers in Abhängigkeit von dem Signal des Positionssensors. Erfindungsgemäß arbeitet die Radiallagerung nach dem Reluktanzprinzip mit reluktanzbasierter radialer Rückstellwirkung, wobei das System stets nach einem minimalen magnetischen Widerstand strebt, der bei einer vorbestimmten Nominallage des Rotors mit Bezug zum Gehäuse gegeben ist. Bei einem radialen Versatz des Rotors kommt es auch entsprechend zu einem Feldlinienversatz und einer damit einhergehenden Erhöhung des magnetischen Widerstandes. Dieser Feldlinienversatz bewirkt dann eine Rückstellkraft (Reluktanzkraft), durch die der Rotor radial zurück in seine Nominallage gebracht wird.

Erfindungsgemäß hat die Magnetlagerung des Weiteren eine Axiallagerung mit zumindest einem permanenten Feldkraftlager, das derart ausgelegt ist, dass es die Gewichtskraft des Rotors halten kann und der Rotor mit einem vorbestimmten Axialspalt mit Bezug zu einem Stator des Systems gehalten wird. Dem permanenten Feldkraftlager ist eine mittels des Regelkreises ansteuerbare Magnetspule zugeordnet, die den magnetischen Fluss des permanenten Feldkraftlagers stärkt oder bei entgegengesetzter Stromrichtung schwächt, so dass der Axialspalt in Abhängigkeit vom Signal des Positionssensors durch geeignete Ansteuerung der Spule mittels des Regelkreises einstellbar ist oder konstant gehalten werden kann.

Die zumindest eine Magnetspule ist vorzugsweise sowohl der reluktanzbasierten Radiallagerung als auch der aktiven Axiallagerung zugeordnet.

Erfindungsgemäß sind somit lediglich ein Regelkreis und ein axialer Positionssensor erforderlich, so dass der vorrichtungstechnische und regelungstechnische Aufwand der erfindungsgemäßen Lösung deutlich geringer als bei den eingangs beschriebenen Lösungen ist. Aus dieser Reduktion der Systemkomplexität resultiert ein signifikant verringerter elektrischer Energieverbrauch. Zudem ist die Ausfallwahrscheinlichkeit des erfindungsgemäßen Magnetlagers deutlich verringert, da sich bei konventionellen Systemen mit fünf Reglern deren Ausfallwahrscheinlichkeiten multiplizieren.

Da die radiale Steifigkeit der Magnetlagerung nicht über einen aktiven Regelkreis, sondern selbsttätig über die vorbeschriebenen Reluktanzeffekte realisiert wird, lässt sich das dynamische Verhalten des Gesamtsystems der Magnetlagerung einfach modellieren.

Entsprechend der Erfindung ist die Axiallagerung mit zwei axial beabstandeten permanenten Feldkraftlagern ausgeführt, denen vorzugsweise jeweils eine Magnetspule zugeordnet ist, die über einen gemeinsamen Regelkreis ansteuerbar sind. Diese beiden in Axialrichtung wirkenden permanenten Feldkraftlager sind vorzugsweise im Bereich der Endabschnitte des Rotors vorgesehen.

Bei einem Ausführungsbeispiel der Erfindung hat die Radiallageranordnung zwei im Axialabstand angeordnete Radiallager, die beide nach dem Reluktanzprinzip arbeiten, wobei jeweils an einem Stator der Magnetlagerung das permanente Feldkraftlager und die Magnetspule angeordnet sind und der Stator durch einen Axialspalt beabstandet zu einem mit dem Rotor verbundenen oder einstückig mit diesem ausgebildeten Rotoraufsatz angeordnet ist.

Zur Optimierung der Reluktanzkraft sind einander gegenüberliegende Stirnflächen des Stators und des Rotors/Rotoraufsatzes profiliert, wobei diese Profilierung derart erfolgt, dass der magnetische Widerstand zur Erzeugung der die selbstständige radiale Rückstellkraft bewirkenden Reluktanzkraft bei einer radialen Auslenkung maximal ist. Diese eine Selbstzentrierung aufgrund der Reluktanzeffekte bewirkende Geometrie der einander gegenüberliegenden Stirnflächenbereiche des Stators und des Rotors/Rotoraufsatzes wird im Folgenden als "Flussformer" bezeichnet.

Die radiale Steifigkeit der Magnetlagerung kann durch geringfügige Variation dieser Geometrie eingestellt werden.

Der Stator und der Rotoraufsatz sind zumindest abschnittsweise aus einem magnetisch leitfähigen Material, vorzugsweise einem weichmagnetischen Material ausgebildet.

Bei einem Ausführungsbeispiel ist die Profilierung am Stator und am Rotoraufsatz durch zumindest einen in Axialrichtung vorstehenden Ring oder eine Erhebung ausgebildet, wobei die reluktanzoptimierte Flussformung dadurch bewirkt wird, dass die Breite des Ringes bzw. der Erhebung stator- und rotorseitig jeweils gleich ist, so dass bei Überdeckung der Ringe/Erhebungen der magnetische Widerstand und die Flussdichte minimal sind. Dabei wird es besonders bevorzugt, wenn am Rotoraufsatz und am Stator zumindest zwei konzentrische Ringe ausgebildet sind.

Der guten Ordnung halber sei darauf hingewiesen, dass der Rotoraufsatz auch einstückig mit dem Rotor ausgebildet sein kann.

Für den Fall, dass eine Erhöhung der radialen Steifigkeit der Magnetlagerung erforderlich ist, können an den in Axialrichtung vorstehenden Ringen/Erhebungen noch zusätzliche, vorzugsweise umlaufende, Rillen ausgebildet werden, wobei diese Rillen stator- und rotorseitig symmetrisch ausgebildet sind. Diese zusätzlichen Rillen bewirken bei einer radialen Verschiebung des Rotors erhöhte Rückstellkräfte (Reluktanzkräfte), welche durch die zusätzlich herbeigeführten Verzerrungen der magnetischen Feldlinien entstehen.

Der Rotor ist vorzugsweise vertikal angeordnet, wobei die mittels der permanenten Feldkraftlagerung erzeugte Magnetkraft die Gewichtskraft des Rotors kompensiert.

Zur Minimierung der Reibung in den radialen und axialen Spalten kann der Rotor in einem Vakuum laufen. Dazu kann beispielsweise das den Rotor aufnehmende Gehäuse als Vakuumgehäuse ausgebildet sein.

Bevorzugte Ausführungsbeispiele der Erfindung werden im Folgenden anhand schematischer Zeichnungen näher erläutert. Es zeigen:
Figur 1 eine dreidimensionale Darstellung eines Versuchsaufbaus mit einem Rotor, der mittels einer erfindungsgemäßen Magnetlagerung gelagert ist;
Figur 2 eine Schnittdarstellung der Anordnung gemäß Figur 1;
Figur 3 Detaildarstellungen des Rotors der Anordnung gemäß den Figuren 1 und 2;
Figur 4 eine Detaildarstellung eines in Figur 3 obenliegenden Teils der Magnetlagerung;
Figur 5 eine Explosionsdarstellung der Magnetlagerung gemäß Figur 4;
Figur 6 den in Figur 4 vergrößert dargestellten Bereich der Magnetlagerung mit den sich im Betrieb einstellenden Feldlinien und
Figur 7 den Feldlinienverlauf in einer Nominallage des Rotors und bei einem Radialversatz.

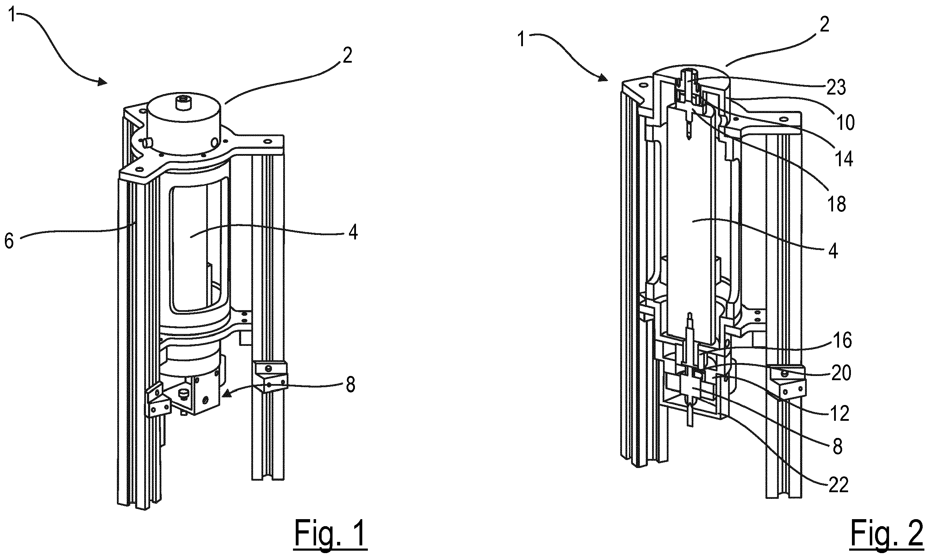

Figur 1 zeigt einen Versuchsaufbau 1, mit dem die Funktionsfähigkeit der erfindungsgemäßen Magnetlagerung 2 eines Rotors 4 bestätigt wurde. Der Rotor 4 ist bei dem dargestellten Versuchsaufbau 1 in einem Gestell 6 gelagert. Für den Fall, dass die erfindungsgemäße Magnetlagerung 2 bei einem Schwungradspeicher eingesetzt werden soll, ist dann anstelle des Gestells 6 ein Gehäuse, vorzugsweise ein Vakuumgehäuse vorgesehen, in dem der als Schwungrad ausgeführte Rotor 4 über die Magnetlagerung 2 gelagert ist.

Bei dem in Figur 1 dargestellten Versuchsaufbau 1 wird der Rotor 4 über einen am Gestell 6 gehaltenen Motor 8 angetrieben. Beim Versuchsaufbau und auch bei Schwungradspeichern ist der Rotor 4 stehend, d.h. mit einer in der Vertikalen (Schwerkraftrichtung) angeordneten Rotorachse positioniert. Weitere Einzelheiten des Versuchsaufbaus 1 werden anhand Figur 2 erläutert, die einen Vertikalschnitt des Versuchsaufbaus 1 zeigt.

Demgemäß hat die Magnetlagerung 2 ein oberes Lagergehäuse 10 und ein unteres Lagergehäuse 12, die an dem Gestell 6 festgelegt sind. In den beiden Lagergehäusen 10, 12, ist jeweils ein Magnetlager (oberes Magnetlager 14, unteres Magnetlager 16) angeordnet, dessen Aufbau im Folgenden näher erläutert wird. Bei den dargestellten Ausführungsbeispielen hat der Rotor 4 einen mit den Magnetlagern 14, 16 in Wirkverbindung stehenden oberen Rotoraufsatz 18 und einen unteren Rotoraufsatz 20, die jeweils drehfest mit dem Rotor 4 verbunden sind. Der in Figur 1 angedeutete Motor 8 ist in einem Motorgehäuse 22 aufgenommen, das an dem Gestell 6 befestigt ist.

In dem oberen Lagergehäuse 10 ist des Weiteren ein Positionssensor angeordnet, der den Axialspalt zwischen einem Stator und dem Rotor misst. Dieser Positionssensor wird im Folgenden Axialsensor 23 genannt.

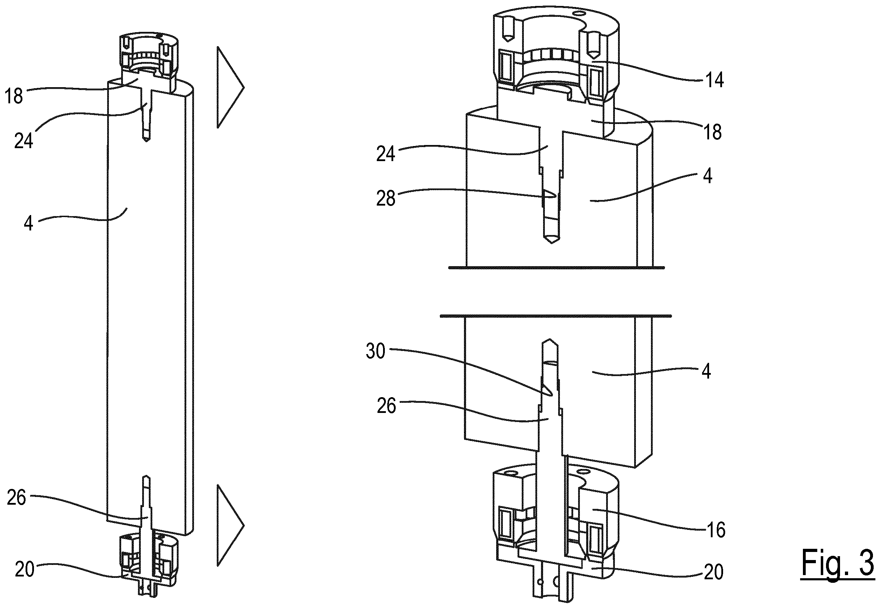

Weitere Einzelheiten der Magnetlager 12, 14 werden anhand Figur 3 erläutert. In Figur 3 links ist der Rotor 4 alleine dargestellt, rechts sind vergrößerte Darstellungen des oberen Magnetlagers 14 und des unteren Magnetlagers 16 und der zugehörigen Bauelemente der Magnetlagerung 2 gezeigt. Man erkennt, dass der Rotoraufsatz 18, 20 jeweils über einen radial zurückgesetzten, in den Rotor 4 eintauchenden Befestigungszapfen 24, 26 in eine entsprechende Aufnahme 28, 30 des oberen bzw. unteren Rotorendabschnittes eingesetzt ist, so dass der eigentliche Rotoraufsatz 18, 20 sich in Axialrichtung aus der jeweiligen Stirnfläche des Rotors 4 heraus erstreckt.

Wie erläutert, ist der Aufbau des oberen und unteren Magnetlagers 14, 16 weitestgehend identisch. Wie in Figur 3 dargestellt, ist allerdings der untere Rotoraufsatz 20 so ausgebildet, dass er nicht direkt an der Stirnseite des eigentlichen Rotors 4 anliegt, sondern im Abstand dazu angeordnet ist. Diese Beabstandung wird durch eine Verlängerung des unteren Befestigungszapfens 26 ermöglicht. Durch diese Axialbeabstandung des unteren Rotoraufsatzes 20 mit Bezug zum eigentlichen Rotor 4 wird Bauraum für die Aufnahme des unteren Magnetlagers 16 geschaffen, dessen Aufbau demjenigen des oberen Magnetlagers 14 entspricht.

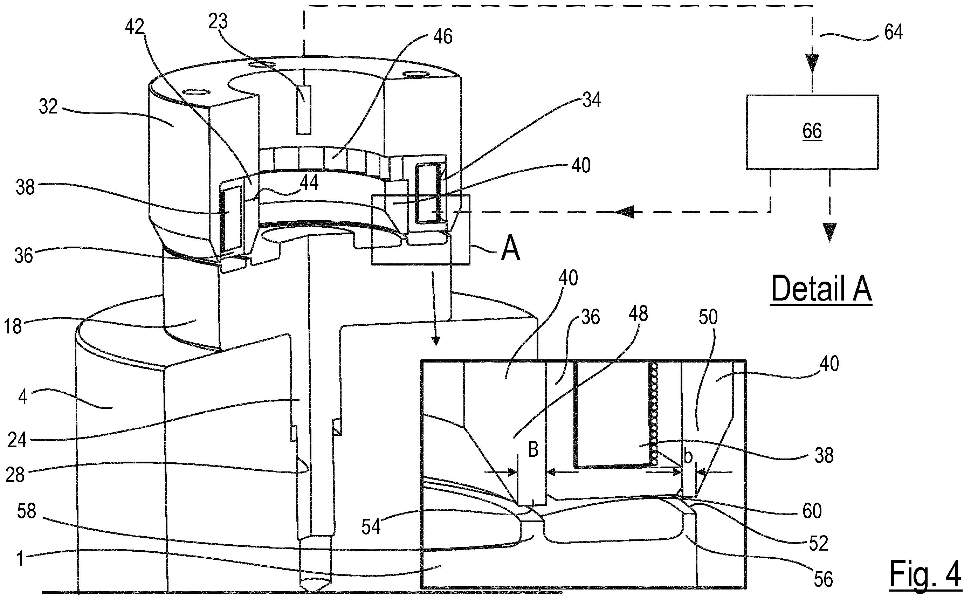

In dem gehäuse-/gestellfesten oberen bzw. unteren Lagergehäuse 10, 12 (in Figur 3 nicht dargestellt) sind dann die eigentlichen Magnetlager 14, 16 angeordnet. Der prinzipielle Aufbau dieser beiden Magnetlager 14, 16 ist weitestgehend identisch und wird anhand der Figur 4 beschrieben, die eine Detaildarstellung des oberen Magnetlagers 14 und der benachbarten Bauelemente zeigt.

Demgemäß hat das obere Magnetlager 14 einen äußeren Lagerring 32, der mit dem Lagergehäuse 10 bzw. 12 verschraubt ist und somit einen Teil des Stators der Magnetlagerung ausbildet. Der äußere Lagerring 32 ist in der Darstellung gemäß Figur 4 nach unten hin radial zurückgestuft, so dass ein Aufnahmeraum 34 ausgebildet wird, in den ein Spulenhalter 36 für eine Magnetspule 38 eingesetzt ist. Der Spulenhalter 36 ist in Radialrichtung nach innen durch einen inneren Lagerring 40 abgestützt, der ebenfalls zumindest abschnittsweise in den Aufnahmeraum 34 eintaucht.

In den Bereich zwischen einer Ringstirnfläche 42 des Aufnahmeraumes 34 und einer oberen Stirnfläche 44 des inneren Lagerringes 40 ist eine Vielzahl von am Umfang verteilten Permanentmagneten 46 eingesetzt. Der innere Lagerring 40 und der äußere Lagerring 32 sind zum Rotoraufsatz 18, 20 hin aus einem magnetisch leitfähigen Werkstoff, vorzugsweise aus einem weichmagnetischen Werkstoff ausgebildet.

Wie in der in Figur 4 unten rechts eingeblendeten Darstellung des Details A dargestellt, sind die rotoraufsatzseitigen Endabschnitte mit einer Geometrie ausgeführt, die aufgrund der Reluktanzkräfte zu einer Selbstzentrierung führt. Diese Endabschnitte der beiden Lagerringe 32, 40 werden als Flussformer 48 bzw. 50 bezeichnet. Zumindest diese Flussformer 48, 50 sind zur Optimierung der Selbstzentrierung aus einem magnetisch leitfähigen Werkstoff hergestellt.

Beim konkreten Ausführungsbeispiel stehen die beiden Flussformer 48, 50 zum Rotoraufsatz 18 hin über den Spulenträger 36 hinaus vor, wobei diese in Axialrichtung vorspringenden Endabschnitte durch eine jeweilige Verjüngung der Flussformer 48, 50 ausgebildet ist, so dass sich stirnseitig zwei konzentrische Ringstrukturen 52, 54 der Flussformer 48, 50 ausbilden. Die Breite B der inneren Ringstruktur 54 ist dabei größer als die Breite b der äußeren Ringstruktur 52.

Der Rotoraufsatz 18 ist mit korrespondierenden Ringen 56, 58 ausgeführt, deren Geometrie derjenigen der Ringstruktur 52, 54 entspricht. In der in Figur 4 dargestellten Nominallage ist zwischen den Ringstrukturen 52, 54 einerseits und den Ringen 56, 58 andererseits ein Axialspalt 60 ausgebildet, der mittels des anhand Figur 2 beschriebenen Axialsensors 23 erfasst wird.

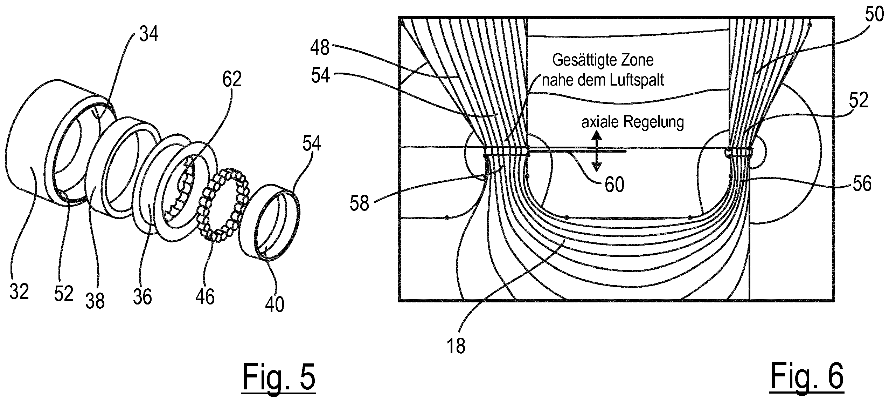

Figur 5 zeigt die Bauelemente des Magnetlagers 14, 16 in einer Explosionsdarstellung. Man erkennt die beiden als Flussformer 48, 50 ausgebildeten Lagerringe 32, 40, deren rotoraufsatzseitige Endabschnitte - wie vorstehend erläutert - zu den Ringstrukturen 52, 54 verjüngt sind. Die Magnetspule 38 ist auf dem Spulenhalter 36 gehalten, der seinerseits in den Aufnahmeraum 34 des äußeren Lagerrings 32 eingesetzt wird. In der Darstellung gemäß Figur 5 ist erkennbar, dass an einer Innenumfangsfläche des Spulenhalters 36 eine Vielzahl von am Umfang verteilten Fixierelementen 62 für die Permanentmagnete 46 ausgebildet sind, so dass diese kraft- oder formschlüssig lagefixiert sind.

Die Permanentmagnete 46 können beispielsweise aus einer Eisen-Neodym-Bor-Legierung bestehen, die Magnetspule ist beim dargestellten Ausführungsbeispiel aus Kupfer hergestellt. Die Rotoraufsätze 18, 20 sowie die Lagerringe 32, 40 der oberen und unteren Magnetlager 14, 16 sind - wie vorstehend erläutert - zumindest abschnittsweise aus einem magnetisch leitfähigen Werkstoff hergestellt.

Die Permanentmagnete sind so ausgelegt, dass sie die Gewichtskraft des Rotors 4 im Betriebspunkt des Lagers abstützen.

Wie in Figur 3 angedeutet, können die obere und die untere Magnetspule 38 über einen Lage-Regelkreis 64 mit einer Leistungselektronik 66 in Abhängigkeit von dem Signal des Axialsensors 23 derart angesteuert werden, dass der magnetische Fluss des Permanentmagneten 46 verstärkt - oder bei entgegengesetzter Bestromung - geschwächt wird. Dementsprechend kann die axiale Position des Rotors 4 über den Regelkreis 64 (Lageregelung) eingestellt werden.

Wie eingangs erläutert, können zur Erhöhung der radialen Steifigkeit die Ringstrukturen 52, 54 und die entsprechenden Ringe 56, 58 mit ringförmigen, ebenfalls konzentrisch positionierten Rillen (nicht dargestellt) versehen werden, die sowohl statorseitig (Flussformer 48, 50) als auch rotorseitig (Ringe 56, 58) ausgebildet werden. Diese Rillen bewirken bei einer radialen Verschiebung des Rotors erhöhte Rückstellkräfte, welche durch die aufgrund der Rillen zusätzlich herbeigeführten Verzerrungen der magnetischen Feldlinien entstehen.

Figur 6 zeigt den Feldlinienverlauf in der Nominalstellung des Rotors. Dargestellt sind die beiden Ringstrukturen 52, 54 der statorseitigen Flussformer 48, 50 und die gegenüber liegend angeordneten Ringe 56, 58 des Rotoraufsatzes 18. Dargestellt ist auch der sich einstellende Axialspalt 60, der in Abhängigkeit von der Ansteuerung der Magnetspulen 38 über den Regelkreis 64 mit der Leistungselektronik 66 in gewissem Umfang verstellbar ist. Es bildet sich im Bereich des Axialspaltes 60 aufgrund der selbstzentrierenden Geometrie der Ringstrukturen 52, 54 und der Ringe 56, 58 im Bereich des Axialspaltes 60 eine gesättigte Zone aus, in der der magnetische Widerstand und die Feldliniendichte minimal ist. Bei einer Auslenkung des Rotors 4 in Radialrichtung entsteht durch den damit einhergehenden Versatz der Feldlinien und der resultierenden Vergrößerung des magnetischen Widerstandes eine Rückstellkraft (Reluktanzkraft), die den Rotor 4 in Radialrichtung zentriert.

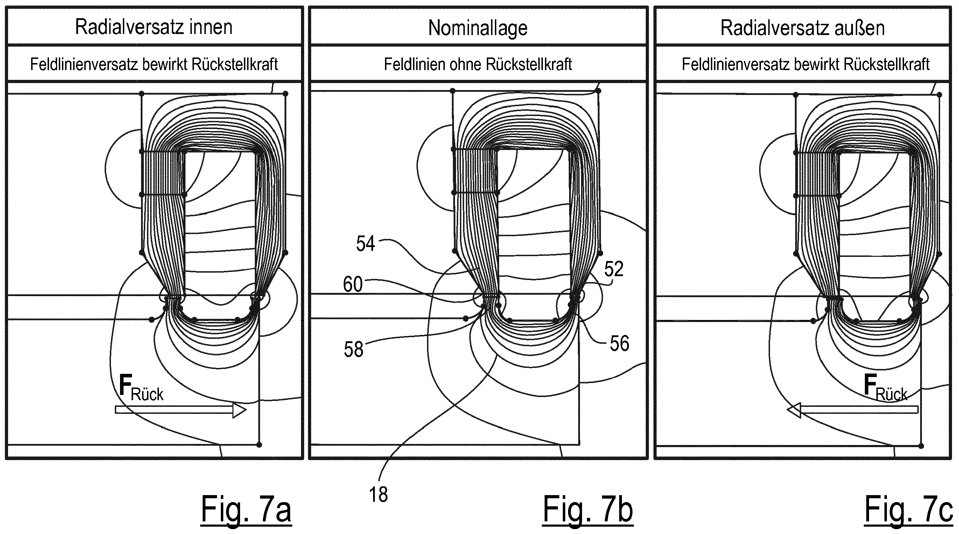

Dies wird nochmals anhand der Figuren 7a bis 7c erläutert.

Figur 7b zeigt die in Figur 6 dargestellte Nominallage des Rotors 4 und den sich bei Bestromung der Magnetspule 38 und aufgrund des Magnetfeldes der Permanentmagnete 46 einstellenden Feldlinienverlauf. Wie vorstehend ausgeführt, ist durch die den Reluktanzeffekt optimierende selbstzentrierende Geometrie der Ringstrukturen 52, 54 und der Ringe 56, 58 der magnetische Widerstand in der Nominallage (kein Radialversatz) minimal.

Bei einem Radialversatz nach innen (Figur 7a) oder nach außen (Figur 7b) wird die Feldliniendichte im Bereich der geringeren radialen Überlappung der Ringstrukturen 52, 54 mit den Ringen 56, 58 vergrößert und entsprechend der magnetische Widerstand erhöht. Da das System immer nach dem minimalen magnetischen Widerstand (Reluktanz) strebt, entsteht eine Rückstellkraft F_{Rück} (Reluktanzkraft), die den Rotor in Richtung des minimalen magnetischen Widerstandes (Figur 7b) beaufschlagt, der sich bei einer vollständigen Überlappung der Ringstrukturen 52, 54 mit den Ringen 56, 58 einstellt. Das System wirkt somit aufgrund der Reluktanzkräfte selbstzentrierend, so dass für die Radialausrichtung des Rotors mit Bezug zum Stator keine aktive Regelung erforderlich ist.

Jede magnetische Feldlinie, die von dem Lagersystem in den Rotor 4 bzw. den Rotoraufsatz 18, 20 eingeleitet wird, trägt zur Abstützung der Gewichtskraft des Rotors bei. Bei optimierter Auslegung des Systems ist auch die magnetisch durchströmte Materialmenge des Rotors geringer als bei konventionellen Systemen. Die Wirbelstromverluste, die bei Magnetlagern einen wesentlichen Anteil am Energieverbrauch haben, sind dadurch bei der erfindungsgemäßen Lösung deutlich geringer als bei herkömmlichen Magnetlagern.

Das erfindungsgemäße Magnetlager kann sehr energiesparend betrieben werden, da es lediglich in einen Betriebspunkt gebracht werden muss, in dem der Permanentmagnet alle statischen Lagerkräfte bereitstellt. Der Regelkreis 64 muss dann nur Störungen, welche von außen auf das System wirken, ausgleichen.

Wie vorstehend erläutert, benötigt die erfindungsgemäße Magnetlagerung nur einen aktiven Regelkreis 64. Die anderen vier Freiheitsgrade, die bei herkömmlichen Lösungen über vier weitere Regelkreise geregelt werden, werden erfindungsgemäß über die vorbeschriebenen reluktanzbedingten Rückstellkräfte in Kombination mit den Kreiselkräften des Rotors 4 definiert.

Offenbart sind eine Magnetlagerung eines Rotors und ein mit einer derartigen Magnetlagerung ausgeführter Schwungradspeicher, wobei die Radiallagerung des Rotors so ausgebildet ist, dass bei einem Radialversatz eine reluktanzbasierende radiale Rückstellung des Rotors erfolgt.

### Bezugszeichenliste:

- 1: Versuchsaufbau
- 2: Magnetlagerung
- 4: Rotor
- 6: Gestell
- 8: Motor
- 10: oberes Lagergehäuse
- 12: unteres Lagergehäuse
- 14: oberes Magnetlager
- 16: unteres Magnetlager
- 18: oberer Rotoraufsatz
- 20: unterer Rotoraufsatz
- 22: Motorgehäuse
- 23: Axialsensor
- 24: Befestigungszapfen
- 26: Befestigungszapfen
- 28: Aufnahme
- 30: Aufnahme
- 32: äußerer Lagerring
- 34: Aufnahmeraum
- 36: Spulenhalter
- 38: Magnetspule
- 40: innerer Lagerring
- 42: Ringstirnfläche
- 44: obere Stirnfläche
- 46: Permanentmagnet
- 48: Flussformer
- 50: Flussformer
- 52: Ringstruktur
- 54: Ringstruktur
- 56: Ring
- 58: Ring
- 60: Axialspalt
- 62: Fixierelement
- 64: Regelkreis
- 66: Leistungselektronik

## Patentansprüche

1. Magnetlagerung eines Rotors (4), der in einem Gehäuse oder Gestell (6) levitiert ist, mit einer Axiallagerung und einer Radiallageranordnung, die jeweils als aktive oder permanente Feldkraftlager ausgeführt sind und mit genau einem Regelkreis (64) zur Ansteuerung des aktiven Feldkraftlagers und mit genau einem Positionssensor zur Erfassung der Position des Rotors (4), wobei die Radiallageranordnung als Reluktanzlager mit einer reluktanzbasierenden Rückstellwirkung ausgeführt ist und die Axiallagerung zumindest ein permanentes Feldkraftlager hat, dem zumindest eine mittels des Regelkreises (64) ansteuerbare Magnetspule (38) zur Einstellung eines Axialspaltes (60) zwischen einem Stirnflächenbereich eines Stators und einem Stirnflächenbereich des Rotors (4), in Abhängigkeit vom Signal des Positionssensors (23) zugeordnet ist, wobei die Axiallagerung zwei axial beabstandete permanente Feldkraftlager hat, denen jeweils eine Magnetspule (38) zugeordnet ist, die über den gemeinsamen Regelkreis (64) ansteuerbar sind, **dadurch gekennzeichnet, dass** die Feldkraftlager im Bereich von Endabschnitten des Rotors (4) vorgesehen sind und in Axialrichtung wirken und wobei mit den Magnetlagern in Wirkverbindung stehende und drehfest mit dem Rotor verbundene Rotoraufsätze (18, 20) jeweils an einem oberen und einem unteren Rotorendabschnitt eingesetzt sind und sich in Axialrichtung aus der jeweiligen Stirnfläche des Rotors (4) heraus erstrecken.

2. Magnetlagerung nach Patentanspruch 1, wobei die Radiallageranordnung zwei im Axialabstand angeordnete Radiallager hat, wobei jeweils an einem Stator das permanente Feldkraftlager und die Magnetspule (38) angeordnet sind und der Stator durch einen Axialspalt (60) beabstandet zu dem mit dem Rotor (4) verbundenen oder einstückig mit diesem ausgebildeten Rotoraufsatz (18, 20) angeordnet ist, wobei einander gegenüberliegende Stirnflächen des Stators und des Rotors (4) bzw. Rotoraufsatzes (18, 20) im Hinblick auf eine Optimierung des die Reluktanzkräfte erzeugenden magnetischen Flusses profiliert sind, wobei Stator und Rotor (4) bzw. Rotoraufsatz (18, 20) zumindest abschnittsweise aus einem magnetisch leitfähigen Material, vorzugsweise einem weichmagnetischen Material bestehen.

3. Magnetlagerung nach Patentanspruch 2, wobei am Stator und am Rotor (4) jeweils zumindest ein axial vorstehender Ring (56, 58) oder eine Ringstruktur (52, 54) ausgebildet ist, wobei der statorseitige Ring (56, 58) und die rotorseitige Ringstruktur (52, 54) jeweils mit einer korrespondierenden Ringbreite (B, b) ausgebildet sind.

4. Magnetlagerung nach Patentanspruch 3, wobei rotorseitig und statorseitig zumindest zwei konzentrische Ringstrukturen (52, 54) oder Ringe (56, 58) oder sonstige axiale Erhebungen ausgebildet sind.

5. Magnetlagerung nach Patentanspruch 3 oder 4, wobei jede Ringstruktur (52, 54) bzw. jeder Ring (56, 58) stirnseitig, vorzugsweise umlaufende, Rillen aufweist.

6. Magnetlagerung nach Patentanspruch 4 oder 5, wobei der Stator einen inneren Lagerring (40) und einen äußeren Lagerring (32) hat, wobei die Magnetspule (38) zwischen dem inneren Lagerring (40) und dem äußeren Lagerring (32) angeordnet ist und diese in Richtung zu den zugeordneten Ringen (56, 58) des Rotors (4) bzw. des Rotoraufsatzes (18, 20) verjüngt sind.

7. Magnetlagerung nach einem der vorhergehenden Patentansprüche, wobei der Rotor (4) stehend angeordnet ist, wobei die mittels der permanenten Feldkraftlagerung erzeugte Magnetkraft die Gewichtskraft des Rotors (4) kompensiert.

8. Magnetlagerung nach einem der vorhergehenden Patentansprüche, wobei der Rotor (4) in einem Vakuum läuft.

9. Magnetlagerung nach einem der vorhergehenden Patentansprüche, wobei die Magnetspule (38) der Axiallagerung und der Radiallagerung zugeordnet ist.

10. Schwungradspeicher, dessen Rotor (4) durch eine Magnetlagerung (2) nach einem der vorhergehenden Patentansprüche gelagert ist.

## Claims

1. Magnetic bearing of a rotor (4), which is levitated in a housing or frame (6), having an axial bearing and a radial bearing assembly, which are each designed as active or permanent field force bearings, and having precisely one control circuit (64) for driving the active field force bearing and having precisely one position sensor for detecting the position of the rotor (4), wherein the radial bearing assembly is designed as a reluctance bearing with a reluctance-based restoring effect and the axial bearing has at least one permanent field force bearing, which has at least one solenoid (38) associated to it, which is drivable via the control circuit (64), for setting an axial gap (60) between an end face region of a stator and an end face region of the rotor (4), in dependence on the signal of the position sensor (23), wherein the axial bearing has two axially spaced, permanent field force bearings, with each of which a solenoid (38) is associated, which are drivable via the common control circuit (64), **characterized in in that** the field force bearings are provided in the region of end portions of the rotor (4) and act in the axial direction, and wherein rotor attachments (18, 20), which are in operative connection with the magnetic bearings and are connected to the rotor in a rotationally fixed manner, are inserted in each case at an upper and a lower rotor end portion and extend in the axial direction out of the respective end face of the rotor (4).

2. The magnetic bearing according to patent claim 1, wherein the radial bearing assembly has two radial bearings arranged at an axial distance, wherein the permanent field force bearing and the solenoid (38) are arranged on a respective stator and the stator is arranged at a distance from the rotor attachment (18, 20), which is connected to the rotor (4) or is formed integrally therewith, via an axial gap (60), wherein mutually opposite end faces of the stator and of the rotor (4) or of the rotor attachment (18, 20) are profiled with a view to optimizing the magnetic flux generating the reluctance forces, wherein the stator and rotor (4) or rotor attachment (18, 20) consist at least in sections of a magnetically conductive material, preferably a soft magnetic material.

3. The magnetic bearing according to patent claim 2, wherein at least one axially projecting ring (56, 58) or ring structure (52, 54) is formed on the stator and on the rotor (4) in each case, wherein the stator-side ring (56, 58) and the rotor-side ring structure (52, 54) are each formed with a corresponding ring width (B, b).

4. The magnetic bearing according to patent claim 3, wherein at least two concentric ring structures (52, 54) or rings (56, 58) or other axial elevations are formed on the rotor side and stator side.

5. The magnetic bearing according to patent claim 3 or 4, wherein each ring structure (52, 54) or each ring (56, 58) has frontal, preferably circumferential, grooves.

6. The magnetic bearing according to patent claim 4 or 5, wherein the stator has an inner bearing ring (40) and an outer bearing ring (32), wherein the solenoid (38) is arranged between the inner bearing ring (40) and the outer bearing ring (32) and these are tapered in the direction towards the associated rings (56, 58) of the rotor (4) and the rotor attachment (18, 20), respectively.

7. The magnetic bearing according to one of the preceding patent claims, wherein the rotor (4) is arranged upright, wherein the magnetic force generated via the permanent field force bearing compensates for the weight force of the rotor (4).

8. The magnetic bearing according to one of the preceding patent claims, wherein the rotor (4) runs in a vacuum.

9. The magnetic bearing according to one of the preceding patent claims, wherein the solenoid (38) is associated with the axial bearing and the radial bearing.

10. A flywheel accumulator, the rotor (4) of which is supported by a magnetic bearing (2) according to one of the preceding patent claims.

## Revendications

1. Logement magnétique d'un rotor (4) qui est en lévitation dans un boîtier ou bâti (6), avec un logement axial et un agencement de palier radial qui sont conçus respectivement comme palier de force de champ actif ou permanent et avec précisément un circuit de régulation (64) pour la commande du palier de force de champ actif et avec précisément un capteur de position pour la détection de la position du rotor (4), dans lequel l'agencement de palier radial est conçu comme palier de reluctance avec une action de rappel basée sur la reluctance et le logement axial présente au moins un palier de force de champ permanent, auquel au moins une bobine magnétique (38) commandable au moyen du circuit de régulation (64) est associée pour le réglage d'une fente axiale (60) entre une zone de surface avant d'un stator et une zone de surface avant du rotor (4), en fonction du signal du capteur de position (23), dans lequel le logement axial présente deux paliers de force de champ permanents espacés axialement, auxquels respectivement une bobine magnétique (38) est associée, lesquelles sont commandables par le biais du circuit de régulation (64) commun, **caractérisé en ce que** les paliers de force de champ sont prévus dans la zone de sections d'extrémité du rotor (4) et agissent dans le sens axial et dans lequel des embouts de rotor (18, 20) se trouvant en liaison active avec les paliers magnétiques et reliés sans pouvoir tourner au rotor sont utilisés respectivement au niveau d'une section d'extrémité de rotor supérieure et d'une section d'extrémité de rotor inférieure et s'étendent dans le sens axial hors de la surface avant respective du rotor (4).

2. Logement magnétique selon la revendication 1, dans lequel l'agencement de palier radial présente deux paliers radiaux agencés à distance axiale, dans lequel le palier de force de champ permanent et la bobine magnétique (38) sont agencés respectivement au niveau d'un stator et le stator est agencé à travers une fente axiale (60) à distance de l'embout de rotor (18, 20) relié au rotor (4) ou réalisé d'un seul tenant avec celui-ci, dans lequel des surfaces avant opposées du stator et du rotor (4) ou de l'embout de rotor (18, 20) sont profilées en ce qui concerne une optimisation du flux magnétique générant les forces de reluctance, dans lequel le stator et le rotor (4) ou l'embout de rotor (18, 20) consistent au moins par sections en un matériau conducteur magnétiquement, de préférence un matériau magnétique doux.

3. Logement magnétique selon la revendication 2, dans lequel respectivement au moins un anneau dépassant axialement (56, 58) ou une structure annulaire (52, 54) est réalisée sur le stator et sur le rotor (4), dans lequel l'anneau côté stator (56, 58) et la structure annulaire (52, 54) côté rotor sont réalisés respectivement avec une largeur d'anneau (B, b) correspondante.

4. Logement magnétique selon la revendication 3, dans lequel au moins deux structures annulaires (52, 54) concentriques ou anneaux (56, 58) ou autres élévations axiales sont réalisées côté rotor et côté stator.

5. Logement magnétique selon la revendication 3 ou 4, dans lequel chaque structure annulaire (52, 54) ou chaque anneau (56, 58) présente, côté avant, des rainures de préférence périphériques.

6. Logement magnétique selon la revendication 4 ou 5, dans lequel le stator présente un anneau de palier (40) intérieur et un anneau de palier (32) extérieur, dans lequel la bobine magnétique (38) est agencée entre l'anneau de palier (40) intérieur et l'anneau de palier (32) extérieur et ceux-ci sont rétrécis en direction des anneaux associés (56, 58) du rotor (4) ou de l'embout de rotor (18, 20).

7. Logement magnétique selon l'une quelconque des revendications précédentes, dans lequel le rotor (4) est agencé verticalement, dans lequel la force magnétique générée au moyen du logement de force de champ permanent compense le poids du rotor (4).

8. Logement magnétique selon l'une quelconque des revendications précédentes, dans lequel le rotor (4) fonctionne dans un vide.

9. Logement magnétique selon l'une quelconque des revendications précédentes, dans lequel la bobine magnétique (38) est associée au logement axial et au logement radial.

10. Accumulateur à volant, dont le rotor (4) est logé par un logement magnétique (2) selon l'une quelconque des revendications précédentes.
